# EUROPEAN PATENT APPLICATION

(11) **EP 4 841 457 A1**
(43) Date of publication of application: **18.11.2026**
(21) Application number: 26177567.0
(22) Date of filing: 08.05.2026
(51) Int. Cl.: G06F 15/78, G06F 9/30

(54) **MEMORY DEVICE AND METHOD**

(30) Priority: 12.05.2025 KR 20250061265
(71) Applicant: Samsung Electronics Co., Ltd., Suwon-si, Gyeonggi-do 16677 (KR)
(72) Inventor: Ro, Yuhwan, 16678 Suwon-si, Gyeonggi-do (KR); Cha, Sanghoon, 16678 Suwon-si, Gyeonggi-do (KR); Lee, Sunjung, 16678 Suwon-si, Gyeonggi-do (KR)
(74) Representative: Grünecker Patent- und Rechtsanwälte PartG mbB

(57) **Abstract**

A memory device includes a plurality of memory banks, and a plurality of processing elements (PEs), wherein each of the plurality of PEs comprises an input selection circuit configured to select and provide one of a plurality of input vectors to an operation, receive, via one input port, a local vector stored in a memory bank corresponding to the PE among the plurality of memory banks, and receive, via one or more other input ports, an external vector transmitted from one or more other memory banks among the plurality of memory banks, a controller configured to control an input selection of the input selection circuit, and an operation circuit configured to receive selected input vectors and perform an element-wise reduction operation.

## Description

### BACKGROUND

### 1. Field

The following description relates to a memory device and method.

### 2. Description of Related Art

Various architectures that combine memory and computational functions may improve the performance of information processing systems. In particular, technology may reduce latency due to data movement by performing operations within or near memory. This approach is generally classified as processing in memory (PIM) technology.

The PIM technology may be implemented by arranging an operation unit in an area adjacent to the memory or by including an operation circuit within a memory bank. Various structures using the technology may reduce data bottlenecks and improve parallel processing efficiency.

However, a reduction operation, parallel operation, or mutual operation structure for effectively processing data distributed and stored in a plurality of memory banks may cause important technical challenges.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one or more general aspects, a memory device includes a plurality of memory banks, and a plurality of processing elements (PEs), wherein each of the plurality of PEs may include an input selection circuit configured to select and provide one of a plurality of input vectors to an operation, receive, via one input port, a local vector stored in a memory bank corresponding to the PE among the plurality of memory banks, and receive, via one or more other input ports, an external vector transmitted from one or more other memory banks among the plurality of memory banks, a controller configured to control an input selection of the input selection circuit, and an operation circuit configured to receive selected input vectors and perform an element-wise reduction operation.

The memory device may include a connection circuit configured to transmit vector data between the plurality of PEs, and the connection circuit may be configured such that the plurality of PEs may be configured to transmit an operation result according to a plurality of operation stages, such that an operation result generated by a PE of a preceding stage is provided to a PE of a subsequent stage according to an order of the plurality of operation stages to perform the element-wise reduction operation.

The connection circuit may be configured to connect a plurality of PE groups in parallel such that the reduction operation is performed independently within each PE group.

The controller may be configured to determine an order of the input selection based on either one or both of a position and a group configuration of the plurality of PEs.

The controller may be configured to control an input port of the input selection circuit according to an order of the reduction operation such that either one or both of the local vector and the external vector is selected.

The input selection circuit may include a multiplexer circuit configured to select and output one of the plurality of input vectors.

Each of the plurality of PEs may be arranged to correspond one-to-one to each of the plurality of memory banks.

One or more PEs of the plurality of PEs may be arranged to correspond in common to two or more memory banks among the plurality of memory banks.

A correspondence relationship between the plurality of PEs and the plurality of memory banks may be configurable according to either one or both of a system configuration and an operation mode.

The memory bank may be formed based on dynamic random-access memory (DRAM).

The input vector may be provided in a form of a matrix comprising a plurality of vectors, and the operation circuit may be configured to perform the element-wise reduction operation in either one or both of a row direction and column direction of the matrix.

The element-wise reduction operation may be configured be performed through a control method and an interconnect structure between the plurality of PEs without a dedicated operation device for separately aggregating or centrally processing common operation results other than the plurality of PEs.

In one or more general aspects, a memory device includes a plurality of memory banks, a plurality of processing elements (PEs), and an inter-PE connection circuit configured to transmit vector data between the plurality of PEs, wherein each of the plurality of PEs may be configured to perform a reduction operation on one or more input vectors, and wherein the connection circuit may be configured to provide a plurality of data transmission path between the plurality of PEs, and the reduction operation is performed in stages or in parallel across the plurality of PEs based on vector data transmitted between the plurality of PEs.

The connection circuit may be configured to hierarchically connect the plurality of PEs over a plurality of stages, such that a PE performing an operation earlier transmits a reduction operation result to a PE performing an operation later, according to an order of the reduction operation.

The connection circuit may be configured to connect a plurality of PE groups in parallel such that the reduction operation is performed independently within each PE group and an operation result of each PE group is aggregated into a selected PE.

Each of the plurality of PEs may be configured to perform the reduction operation based on either one or both of an external vector transmitted via the connection circuit and a local vector stored in a memory bank corresponding to a determined PE.

The connection circuit may be configured to dynamically select a connection path between the plurality of PEs such that a path of the reduction operation is adjustable according to an order of the reduction operation.

The reduction operation may be configured to be performed based on the connection circuit and the plurality of PEs without a dedicated operation device for centrally aggregating common operation results other than the plurality of PEs.

In one or more general aspects, a method includes performing, by a plurality of processing elements (PEs) corresponding to each of a plurality of memory banks, an element-wise reduction operation by receiving a local vector stored in each memory bank, providing a result of an operation performed by a plurality of lower-stage PEs among the plurality of PEs as an input to PEs of a subsequent stage, performing, by a PE of each stage, a reduction operation based on a plurality of input operation results, and generating a final reduction operation result of vector data distributed across the plurality of memory banks by hierarchically performing the element-wise reduction operation over a plurality of stages.

The generating of the final reduction operation result may include generating the final reduction operation result through the element-wise reduction operation performed across the plurality of PEs over a plurality of stages without a dedicated operation device for centrally aggregating common operation results.

Other features and aspects will be apparent from the following detailed description, the drawings, and the claims.

### BRIEF DESCRIPTION OF THE DRAWINGS

FIG. 1 illustrates a block diagram of an example of a memory device according to one or more embodiments.
FIG. 2A illustrates an example of an operation structure of a deep learning recommendation model according to one or more embodiments.
FIG. 2B illustrates an example of a sparse matrix-matrix multiplication (SpMM) operation performed by a graph neural network (GNN) model according to one or more embodiments.
FIG. 3 illustrates an example of a configuration of a memory device according to one or more embodiments.
FIGS. 4A to 4D illustrate examples of a step-by-step process of performing a reduction operation by using vector data distributed and stored in a plurality of memory banks based on a memory device structure according to one or more embodiments.
FIGS. 5A and 5B illustrate examples of a structure configured to perform inter-bank reduction operations in parallel based on a plurality of operation groups in a memory device according to one or more embodiments.
FIG. 6A illustrates a block diagram of an example of a configuration of a processing element (PE) according to one or more embodiments.
FIG. 6B illustrates an example of a structure in which a plurality of pairs of an input selection circuit and an operation circuit is included in parallel in a single PE according to one or more embodiments.
FIG. 7 illustrates a block diagram of an example of a specific configuration of a PE according to one or more embodiments.
FIG. 8 illustrates an example of a method of performing a reduction operation according to one or more embodiments.
FIG. 9 illustrates an example of an electronic device according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms including technical and scientific terms used herein have the same meaning as those commonly understood by one of ordinary skill in the art to which the present disclosure pertains and specifically in the context on an understanding of this disclosure. Terms such as those defined in commonly used dictionaries are to be interpreted as having a meaning that is consistent with their meaning in the context of the relevant art and specifically in the context of this disclosure, and are not to be interpreted in an idealized or overly formal sense unless expressly so defined herein.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

The examples may be implemented as various types of products such as, for example, a personal computer (PC), a laptop computer, a tablet computer, a smart phone, a television, a smart home appliance, an intelligent vehicle, a kiosk, and a wearable device. Hereinafter, examples are described in detail with reference to the accompanying drawings. In the drawings, like reference numerals are used for like elements.

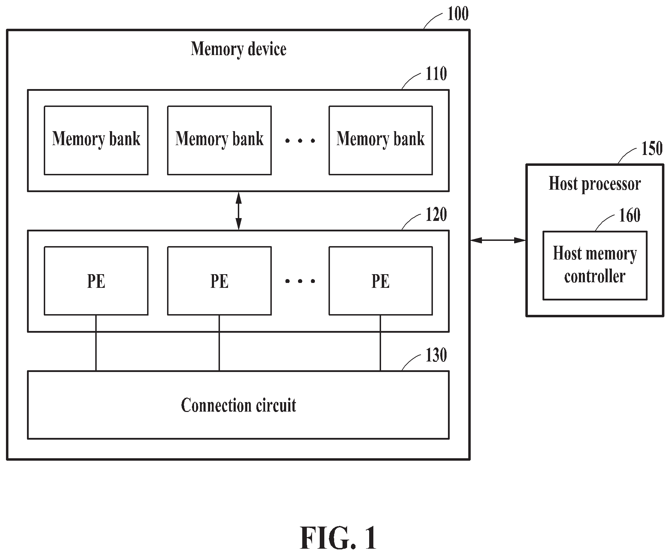

FIG. 1 illustrates a block diagram of an example of a memory device according to one or more embodiments.

A memory device 100 illustrated in FIG. 1 may include a memory operation structure based on a processing-in-memory (PIM) method and may include a plurality of memory banks 110, a plurality of processing elements (PEs) 120, and a connection circuit 130 for transmitting vector data between the plurality of PEs 120. However, not all the illustrated components are necessarily essential components. The memory device 100 may be implemented by more or fewer components than the illustrated components.

The memory device 100 may interface with an external host processor 150 and may be controlled through a host memory controller 160 disposed inside or outside the host processor 150.

The memory banks 110 may include multiple storage areas, and each memory bank of the memory banks 110 may store a portion of matrix data or vector data. The memory banks 110 may be implemented with various types of semiconductor memory devices, such as dynamic random access memory (DRAM), static random-access memory (SRAM), resistive RAM (RRAM), and the like. The plurality of memory banks 110 may be formed of, for example, 8, 16, or 32 units and may be arranged hierarchically or grouped together depending on a system architecture to be utilized for parallel operations.

A PE of the PEs 120 may be an operation circuit block that may be arranged adjacent to a memory bank of the memory banks 110 and may be configured to directly perform an operation within or near a memory. A PE of the PEs 120 may be referred to as an operator, an operation module, an operation block, and/or a PIM block, and may include, for example, an input selection circuit, an operation circuit, and a controller.

Each of the PEs of the PEs 120 may be arranged to correspond one-to-one to a respective memory bank of the memory banks 110, and in this configuration, the PEs 120 may be referred to as per-bank PEs. Alternatively, however, one of the PEs 120 may be arranged to correspond to two or more of the memory banks 110. For example, considering area constraints or computational efficiency, two of the memory banks 110 may be configured to share one of the PEs 120. In this case, the one of the PEs 120 may be referred to as a shared PE, a bank group-corresponding PE, and the like.

As described in detail below, the input selection circuit may be configured to selectively receive not only a local vector (e.g., a vector stored in the corresponding memory bank of the memory banks 110) directly accessible to the PEs 120, but also an external vector transmitted through the connection circuit 130. The input selection circuit may include a multiplexer (MUX), a switching network, and/or a multi-input buffer structure.

The input selection circuit may select and provide one of a plurality of input vectors to an operation. An input vector may be continuous multi-dimensional data that is stored in one or more of the plurality of memory banks 110 within the memory device 100 or that includes values transmitted from the adjacent PE of the PEs 120, and may refer to a data set that is a target of an element-wise operation.

In addition, the input vector may be provided in the form of a matrix including a plurality of vectors rather than a single vector. For example, when a specific operation includes multiple vector data at the same time, each vector may be arranged in the row or column direction and expressed as a single two-dimensional matrix, and this matrix may be provided as an input to the PEs 120.

In this case, the operation circuit may be configured to perform an element-wise reduction operation in a row direction or column direction of the corresponding matrix. For example, the operation circuit may be configured to perform an addition operation on the same index elements of each column in the row direction, and/or to perform a multiplication operation or a maximum value operation on values of a specific row in the column direction.

The operation circuit may perform an element-wise operation on one or more received vectors. For example, the operation circuit may be configured as a multiply-accumulator (MAC), an adder, a multiplier, and/or an ALU, and may perform a reduction operation such as addition, multiplication, maximum operation, and/or average operation on input vectors.

The reduction operation may refer to an operation that performs accumulation processing on a plurality of values to generate one result value. For example, operations such as sum, product, maximum, minimum, and mean on multiple scalar values may all be included in the reduction operation. When an operation target is a vector or matrix, reduction may be performed along a determined dimension of a corresponding structure. For example, element-wise summation of vectors or a mean operation based on a determined axis of the matrix may be included in the reduction operation.

The operation circuit may operate on integer data or floating point data and may be utilized in, for example, artificial intelligence (AI) inference, graph neural network (GNN) processing, and/or high-speed vector aggregation.

The controller may control an input selection operation, operation timing, output path switching, and the like of each of the PEs 120, and may be configured to operate in an operation scenario including inter-bank vector transfer. For example, when one of the PEs 120 performs an operation by receiving as an input not only a vector of a local memory bank but also an external vector transmitted from an adjacent or another memory bank, the controller may control an operation flow across the plurality of memory banks 110. In this structure, the controller may be configured to control a vector transfer and an operation order based on an interconnect structure between multiple PEs 120 beyond control within a single one of the PEs 120 and may be referred to as an inter-bank operation controller.

In hardware implementation, however, these components may not be implemented physically separated but may be implemented in the form of a single integrated operator block or a processor. For example, the components may be configured as a PIM-dedicated operation core having a lightweight instruction set or may be configured as a single circuit block as a portion of a micro-instruction-based operation scheduler and an operator. In this way, the PEs 120 may be configured in various ways according to functional requirements, a circuit area, power consumption, and/or PIM instruction structure, and is not limited to a specific structure.

The connection circuit 130 may include a wiring or wiring-based circuit structure configured to transmit vector data from one or more PEs to another PE. The connection circuit 130 may be configured as a simple serial wiring or may be expanded to a structure including a selection circuit or a switch circuit as needed.

The connection circuit 130 may provide a data path for exchanging operation data or transmitting an accumulated result between the plurality of PEs 120. The connection circuit 130 may be implemented based on an optimized wiring structure for a reduction operation between all the memory banks 110.

The connection circuit 130 may be implemented as, for example, a multi-level tree structure, a parallel bus structure, a mesh network, a ring network, and/or a hybrid structure, and may be configured to perform local reduction operations and high-level aggregations within a specific PE group in stages or in parallel.

For example, the connection circuit 130 may be configured to hierarchically connect the PEs 120 over a plurality of stages, so that the reduction operation may be performed in a way that an operation result generated from a lower PE is transmitted to an upper PE. Alternatively, the connection circuit 130 may be configured to connect a plurality of PE groups in parallel so that the reduction operation may be performed independently within each group.

The host processor 150 may be a central processing unit (CPU), a graphics processing unit (GPU), a neural processing unit (NPU), and/or other general-purpose processors disposed outside the memory device 100. The host processor 150 may perform operation requests and data input/output with the memory device 100 and may support various command sets including in-memory operations. The host processor 150 may transmit a PIM operation command or a standard memory access command (e.g., load/store command) to the memory device 100 and may include an operand address, an operation method, an operation target range, and/or an operation control parameter in a command as needed.

A PIM operation command may be a command that instructs the PEs 120 within the memory device 100 to directly perform an operation and may include an operation type such as, for example, vector addition, vector-scalar multiplication, element-wise comparison, and/or conditional update. The PIM operation command may also include control parameters such as an operation method (e.g., addition and multiplication), memory addresses of operand vectors, a length of an operation target vector, an operation result storage location, an operation order, and/or timing information.

For example, a command may be generated to perform an addition operation on two vectors stored in a specific memory bank and store the result in another memory bank, in which case the operation method may be specified as "ADD," an operand address as "ADDR_A" and "ADDR_B," and a storage address as "ADDR_C." The **PIM** operation command may be interpreted through the host memory controller 160 or may be processed by a simple command interpretation function or control logic included within the memory device 100. In this case, the internal control logic may be configured to transmit an operation control signal to the corresponding one of the PEs 120 according to the received command.

The host memory controller 160 may be integrated within the host processor 150 or may be disposed externally as a separate controller chip. The host memory controller 160 may control command decoding, address translation, transmission order control, and memory interface timing. Alternatively, a separate local memory controller may be included within the memory device 100 to perform command distribution, scheduling, and computational resources control in cooperation with the host memory controller 160.

The configuration illustrated in FIG. 1 is only an example, and specific implementation of the memory device 100 may be expanded or changed in various ways. For example, each of the PEs 120 may correspond one-to-one to a corresponding one of the memory banks 110 or may be configured as a shared structure for the plurality of memory banks 110. Alternatively, a correspondence relationship between the plurality of PEs 120 and the plurality of memory banks 110 may be configurable according to a system configuration or an operation mode.

The connection circuit 130 may be a single tree structure connecting all PEs 120 or may be configured to provide parallel connections between a plurality of groups. In addition, the connection circuit 130 may also support a parallel group-based aggregation method that aggregates results generated from multiple PEs 120 into a specific element, in addition to hierarchical reduction operations. The memory device 100 may be widely applied to high-performance computing servers, edge devices, a mobile system on a chip (SoC), AI operation accelerators, and/or the like.

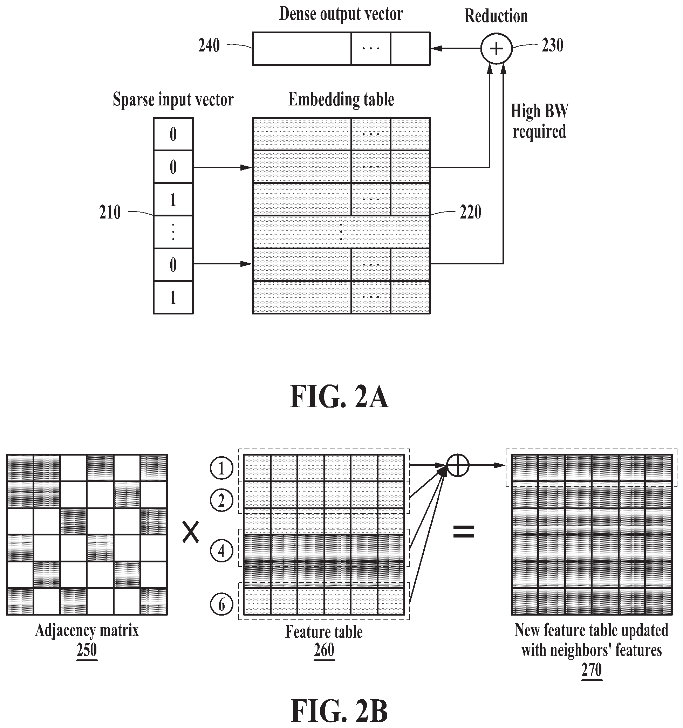

FIG. 2A illustrates an example of an operation structure of a deep learning recommendation model according to one or more embodiments.

Referring to FIG. 2A, in a recommendation model, each user or item input may include multiple categorical variables, and a categorical variable may be expressed in the form of a sparse input vector 210. The sparse input vector 210 may include a one-hot or multi-hot encoded vector and may be utilized as a signal for identifying items activated in an input.

Embedding vectors corresponding to the activated items may be selected from an embedding table 220 and read. The embedding table 220 may include thousands or more vectors, and each vector may be formed of, for example, 64 dimensions, 128 dimensions, or more dimensions. Here, for a plurality of activated items included in one sparse input vector (e.g., the sparse input vector 210), corresponding embedding vectors may be selected in parallel, and all selected vectors may be aggregated to generate one dense output vector 240.

This vector aggregation may be performed in an element-wise operation method, and may be configured in the form of an element-wise addition operation or a mean operation in most cases. As illustrated in FIG. 2A, the selected vectors may be passed to a reduction module 230 to perform element-wise accumulation processing, and a single vector (e.g., the dense output vector 240) may be output as a result. This operation may be performed repeatedly within one inference request and may be repeated tens or hundreds of times within one batch.

FIG. 2B illustrates an example of a sparse matrix-matrix multiplication (SpMM) operation performed by a GNN model according to one or more embodiments. The GNN model may perform learning and inference by updating a feature vector of each node based on a feature vector of adjacent nodes, and for this purpose, a multiplication operation between an adjacency matrix and a feature table may be repeatedly performed.

Referring to FIG. 2B, an adjacency matrix 250 of the graph is an expression of a connection relationship between each node in the form of a sparse matrix, and '1' in each row may indicate an adjacent node to which a node corresponding to the row is connected. A feature table 260 may include a high-dimensional feature vector corresponding to each node of the graph. For example, in FIG. 2B, feature vectors corresponding to nodes 1, 2, 4, and 6 are selected and displayed, and these vectors may be multiplied by a determined row of the adjacency matrix 250.

An output table 270 may represent a new feature table and may be generated by adding or averaging feature vectors of adjacent nodes element by element. Each output vector may be a result of accumulating feature vectors selected from neighboring nodes of a target node element by element and may generally be configured through element-wise addition, averaging, and/or attention-based weighted sum.

For example, a first row of the output table 270 may be a result generated by adding the feature vectors of the nodes 1, 2, 4, and 6 selected according to a first row of the adjacency matrix 250 element by element. This operation may be repeatedly performed on all nodes and may thus require a large amount of computation and high bandwidth. In particular, when the feature vectors are stored in different memory banks in a DRAM die, data may need to be read in parallel from a plurality of memory banks to perform an operation, and a system bottleneck may occur in a process of re-aggregating the data.

The operations described with reference to FIGS. 2A and 2B all have a common structure of reading vectors distributed and stored in a plurality of memory banks within a memory die and subsequently performing accumulation or multiplication element by element to generate one vector result. These operations may be classified as an element-wise reduction operation and may occur repeatedly in the fields of AI and high performance computing (HPC), such as embedding aggregation of the recommendation model or an SpMM operation of a GNN. The element-wise reduction operation may refer to an operation that performs a reduction operation between corresponding values element by element on a plurality of vectors having a same size.

In particular, when an operation target vector is distributed and stored in multiple memory banks, an inter-bank reduction operation is required to re-aggregate operation results obtained from each of the banks. The inter-bank reduction operation may refer to an operation that collects vectors or data pieces distributed and stored in a plurality of memory banks and performs a reduction operation between the vectors or data pieces. For example, when feature vectors stored in each memory bank are added element by element to generate one output vector, this operation may be classified as an inter-bank element-wise reduction operation. In this case, the inter-bank reduction operation may include performing a local operation within each bank and subsequently transmitting a result to another bank or a central aggregation structure for accumulation.

In some typical memory systems, arranging a separate dedicated operation device through a peripheral area at a center of the die or centralizing data by using an external aggregator and then performing an operation may support the inter-bank reduction operation. Such a typical structure, however, has several limitations as follows. First, essential circuits such as an address decoder, a clock wiring, and a global bus may be densely located at the center of the memory die, leaving limited space for inserting new wiring and PEs. Second, wiring through peripheral circuits may cause interference with existing circuits and reduce the freedom of arrangement, thereby increasing structure complexity. Third, adding a dedicated operation circuit may lead to an increase in a circuit area, which may increase the entire area of the memory die and negatively affect manufacturing yield and process efficiency.

Considering and in contrast to these limitations of typical memory systems, a memory structure of one or more embodiments may support the inter-bank reduction operation while maintaining structural simplicity and scalability. The memory device of one or more embodiments (e.g., the memory device 100 of FIG. 1) may be configured to perform the inter-bank reduction operation in stages or in parallel by utilizing PEs as already arranged in each memory bank, without including a separate dedicated operation device. Each PE may selectively receive a vector transmitted from outside as well as a local operation to perform an operation and may hierarchically transmit an operation result to an upper PE or perform parallel aggregation within a group.

Since this structure of one or more embodiments is configured based on an inter-bank direct connection circuit, data transmission and operation processing may be performed through a short wiring path without bypassing a complex peripheral circuit. Thus, this memory structure of one or more embodiments may increase the freedom of wiring arrangement and may also alleviate the difficulty of operation path optimization and layout configuration. In addition, the memory structure of one or more embodiments may reduce configuration and verification cost, as compatibility with an existing memory configuration flow may be maintained. The memory device structure of one or more embodiments may be applied not only to a DRAM-based system but also to other general memory architectures including on-die operations.

However, implementation effects and differences from the above-described typical structures are described based on specific examples, and technical challenges or applicability are not limited thereto. The memory device of one or more embodiments may be flexibly expanded and applied to various memory operation environments and structures, and implementation effects thereof may also vary depending on the situation.

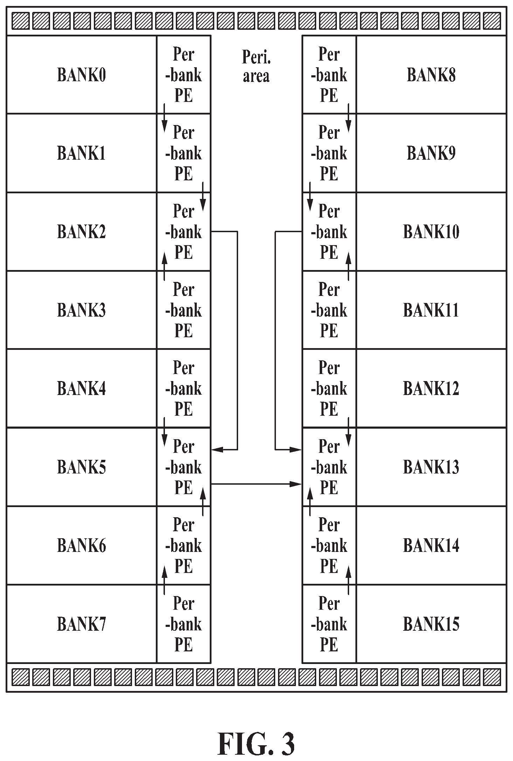

FIG. 3 illustrates an example of a configuration of a memory device according to one or more embodiments. The description provided with reference to FIGS. 1 to 2B may substantially equally apply to FIG. 3.

The memory device illustrated in FIG. 3 may include a total of 16 memory banks (e.g., a memory bank 0 to a memory bank 15) and 16 per-bank PEs disposed corresponding to each of the 16 memory banks. Each memory bank may be a basic unit for storing data that may be formed based on DRAM or other high-speed memory devices, and a corresponding PE may perform, on data stored in a corresponding memory bank, a local operation and an operation with external data.

In FIG. 3, each PE may be connected to each other in a vertical direction and a horizontal direction, and the connection circuits indicated by the arrows indicate a direction in which data may be transmitted between the PEs. A connection circuit may be implemented as a wiring or a direct communication circuit between the PEs, and each arrow may visually illustrate a flow of vector data transmission. For example, the PE disposed in the memory bank 0 may transmit data in a direction toward the memory bank 1, and the PE in the memory bank 5 may perform horizontal movement of data in a direction toward the memory bank 13.

The structure illustrated in FIG. 3 may be configured as a tree-based interconnect structure as a whole. In the structure illustrated in FIG. 3, an inter-bank reduction operation may be performed through an operation circuit included in each PE. The operation circuit may be configured as an accumulator or a MAC configured to process operations such as addition and/or multiplication and may be expanded to operations such as determining an average and/or maximum value in addition to simple summation. An operator included in a PE may receive a local vector or an external vector transmitted from an adjacent PE as an input and perform an element-wise reduction operation on the received vector.

The interconnect structure configured in the vertical and horizontal directions as in FIG. 3 may not only perform vertical accumulation of a single layer but also be expanded to a hierarchical aggregation structure that aggregates data in the horizontal direction based on a PE at a specific location and subsequently transmits the data to an upper PE in the vertical direction to generate a final reduction result.

For example, PEs corresponding to the memory bank 0 to the memory bank 7 may be arranged in a single vertical series, and each PE may perform a reduction operation in stages by processing and transmitting local vector data to a PE located at an upper stage in a hierarchy. In this manner, a final aggregate result of the corresponding operation group may be generated by a PE corresponding to the memory bank 5.

Likewise, PEs corresponding to the memory bank 8 to the memory bank 15 may also perform operations hierarchically in a similar manner, and results of the operations may be aggregated in a PE of an upper stage corresponding to the memory bank 13. Here, the PE located in the memory bank 5 may transmit an operation result to the PE in the memory bank 13 via a horizontal connection circuit, and at the memory bank 13, the operation results generated in the two groups may finally be integrated or output to the outside.

The structure illustrated in FIG. 3 may thus be configured as a two-stage reduction structure that sets the memory banks 0 to 7 and the memory banks 8 to 15 as independent operation groups, performs reduction operations in parallel within each group, and finishes the results in the PE of the memory bank 13. This structure of one or more embodiments may be an efficient configuration configured to aggregate data distributed across multiple banks without arranging a separate dedicated operation device in the center.

The connection circuit between the PEs may be implemented in various manners. For example, a connection between each of the PEs may be configured as a fixed single-directional wiring structure, in which case each of the PEs may transmit data only in a predetermined direction. This structure may have the advantage of simple wiring arrangement and area optimization, but flexibility may be limited as an operation scenario is fixed.

Alternatively, each PE may be configured to have a plurality of input and output paths and be configured to dynamically set connection paths by including a selection circuit or a multi-path switching circuit. For example, one PE may receive two or more inputs from a vertical upper PE, a vertical lower PE, a left PE, and a right PE, and/or may select a transmission direction according to an operation order. This dynamic connection method may allow a flow of reduction operations to be adjusted according to a relative position of components and may be advantageous for operation group reorganization, priority change, and/or path reconfiguration for fault tolerance.

In addition, the interconnect structure between processing elements may be expanded to include diagonal routing in addition to the vertical or horizontal connection. For example, by transmitting data in a diagonal direction, a reduction path may be configured to be short, and/or it may be possible to respond to an irregular group aggregation scenario. The diagonal routing may allow a direct connection between spatially non-adjacent PEs, thereby supporting fast integrated processing after parallel operations.

The structure illustrated in FIG. 3 is only an example, and the number of memory banks, the arrangement structure of the PEs, the connection paths, and the connection directions may be variously changed depending on the implementation purpose, die space, and operation requirements. For example, the interconnect structure may also be expanded to include 32 or 64 memory banks and to configure parallel reduction groups in a plurality of layers.

In addition, as illustrated in FIG. 3, reduction results may be hierarchically aggregated based on a specific memory bank (e.g., the memory bank 13). In another example, however, a starting point of operations and a final result aggregate memory bank may not be fixed in advance but may be flexibly set according to control parameters of the controller, the input selection circuit, the operation priority, the group configuration, and/or the operation path optimization policy. For example, either the memory bank 5 or the memory bank 13 may be selected as a final aggregate memory bank, and/or the reduction path may be reconfigured within the same interconnect structure, depending on the operation environment or application conditions.

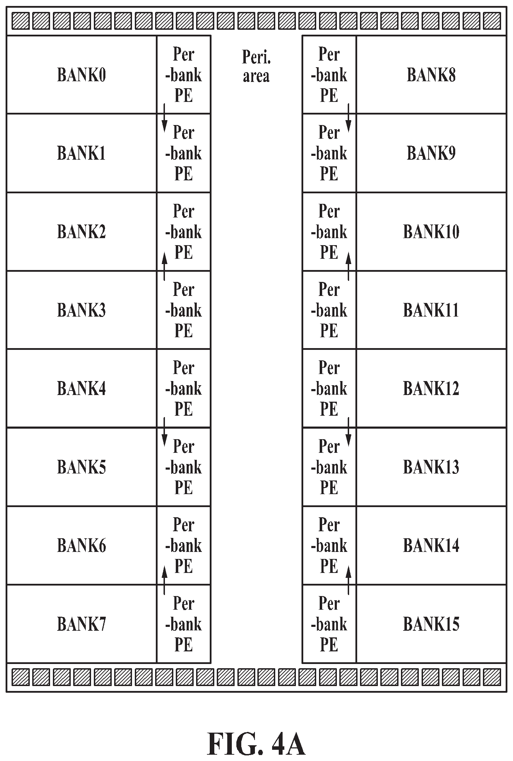

FIGS. 4A to 4D illustrate examples of a step-by-step process of performing a reduction operation by using vector data distributed and stored in a plurality of memory banks based on a memory device structure (e.g., the memory device structure illustrated in FIG. 3) according to one or more embodiments. The description provided with reference to FIGS. 1 to 3 may substantially equally apply to FIGS. 4A to 4D.

FIGS. 4A to 4D illustrate operations and data transmission flows performed through PEs, and the arrows indicate a transmission direction of the vector data. The reduction operation may include, for example, element-wise addition, multiplication, and/or maximum value operation. In this example, the description is based on an addition operation.

Referring to FIG. 4A, in the first stage, 8 banks, which are half of a total of 16 memory banks, may transmit data to counterpart banks, and receiving banks may perform an element-wise addition operation between a local vector and a transmitted vector. For example, as indicated by the arrows of FIG. 4A, the PEs corresponding to memory banks 0, 3, 4, 7, 8, 11, 12, and 15 may transmit respective local vectors to the PEs of memory banks 1, 2, 5, 6, 9, 10, 13, and 14, respectively. Here, vector transmission may be performed via a connection circuit, and each of the receiving PEs on a receiving end may receive its own local vector and a vector transmitted from the outside as an input to perform the element-wise addition operation and store a result.

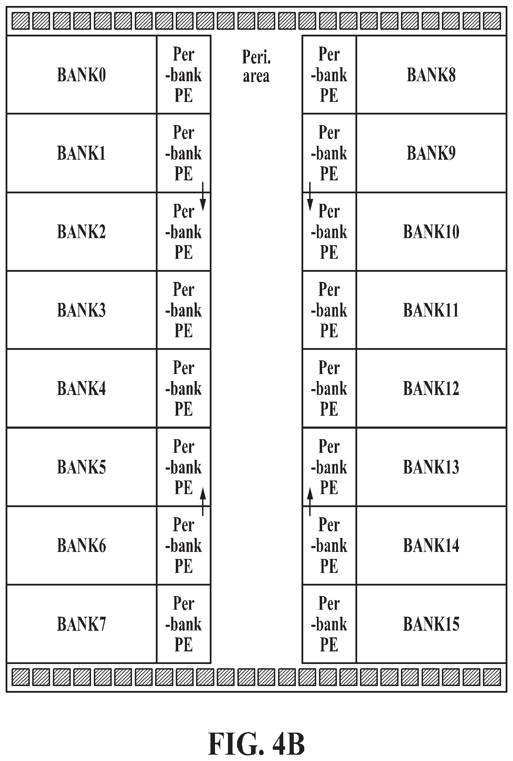

Referring to FIG. 4B, in the second stage, some of operation results of the first stage may be transferred to PEs of an upper stage, and the reduction operation may be performed again. For example, as indicated by the arrows of FIG. 4B, the PEs corresponding to the memory banks 1, 6, 9, and 14 may transmit operation result vectors they have to the PEs corresponding to the memory banks 2, 5, 10, and 13, respectively, and the receiving PEs may update an accumulated result by adding the two vectors in the same manner.

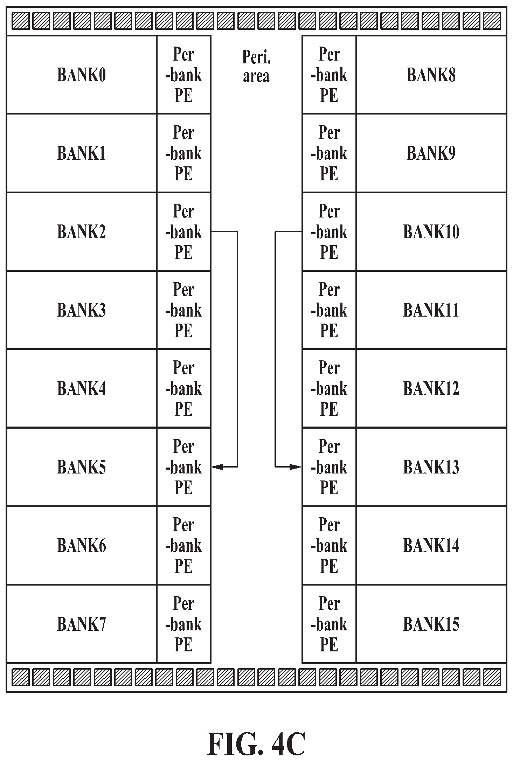

Referring to FIG. 4C, in the third stage, a more condensed reduction operation may be performed based on results of the previous stage. For example, as indicated by the arrows of FIG. 4C, the PEs corresponding to the memory banks 2 and 10 may transmit vector data to the PEs corresponding to the memory banks 5 and 13, respectively, and each of the receiving PEs may add the received vector and its own result vector to aggregate. Here, the memory banks 5 and 13 may be utilized as a final aggregation point of each group (e.g., the memory banks 0 to 7 and the memory banks 8 to 15).

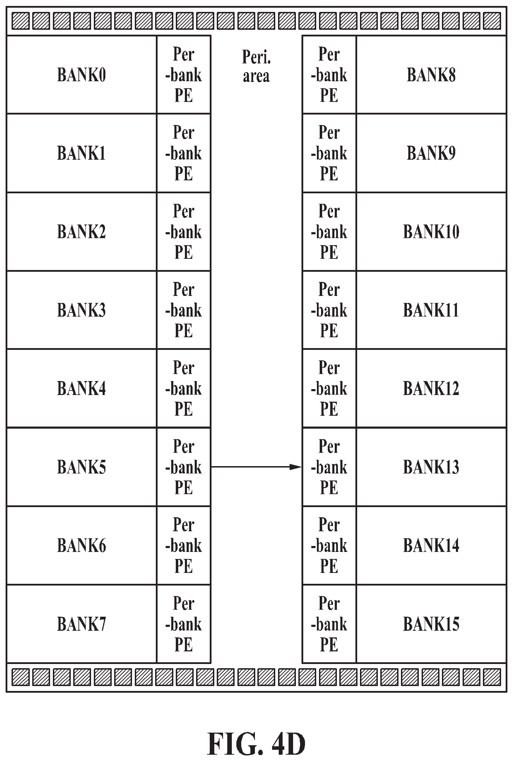

Referring to FIG. 4D, in the fourth and final stage, as indicated by the arrow of FIG. 4D, the PE corresponding to the memory bank 5 may transmit the result vector it has to the PE corresponding to the memory bank 13, and the PE corresponding to the memory bank 13 may add the received vector and its result vector to generate a final reduction result for the vectors distributed to the 16 banks.

For each stage of FIGS. 4A to 4D, the operations performed in the stage may be performed in parallel, and intermediate results may be configured to be aggregated into PEs of the upper stage. Accordingly, this method of one or more embodiments may reduce the amount of data movement compared to the typical method of centralizing all data and performing operations, and may provide a structural advantage of alleviating wiring complexity and operation bottlenecks.

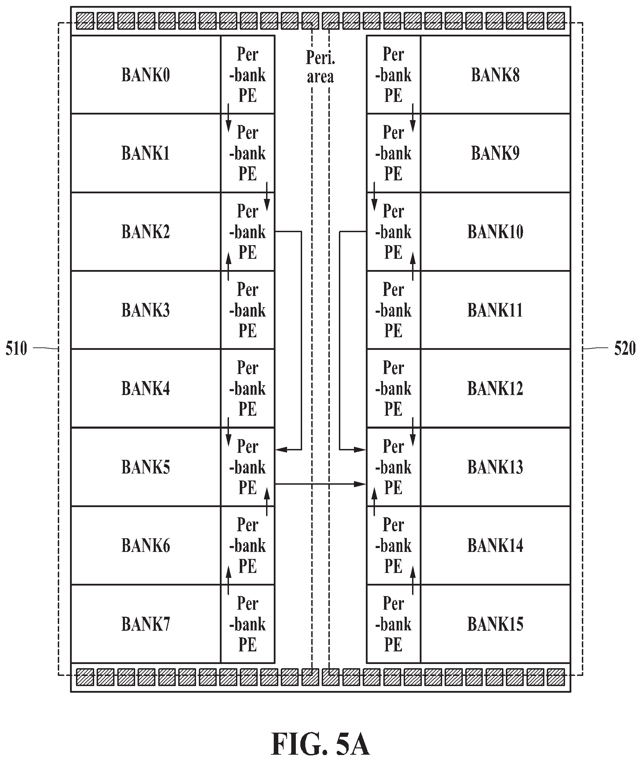

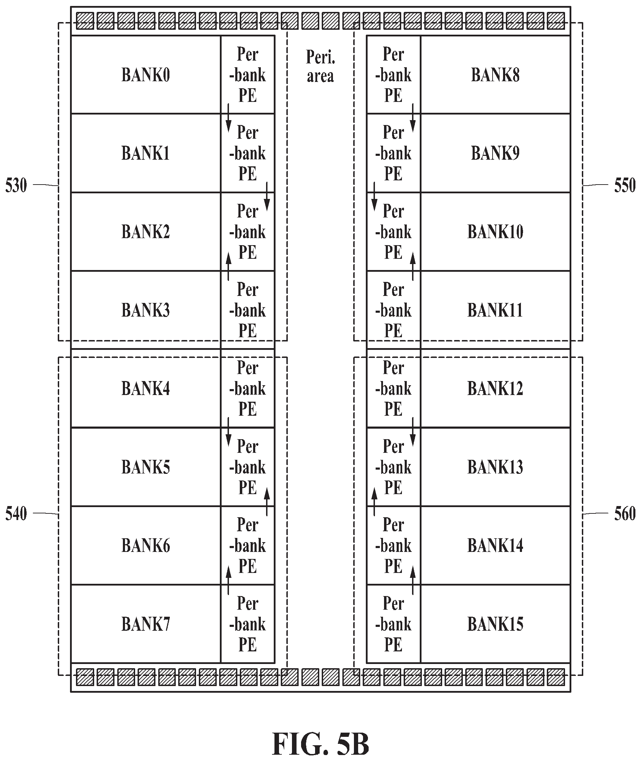

However, the operation sequences illustrated in FIGS. 4A to 4D are only examples, and the number of operation target banks, the group configuration method, and the data transmission order may be variously changed depending on the memory structure and application requirements. For example, when the number of operation target banks is 32 or more, the structure may be expanded to a reduction structure of 5 or more stages, and an operation method or data path in a specific stage may also be flexibly set. Hereinafter, one or more non-limiting examples of an expandable structure of the memory device, a group-based reduction execution method, and an implementation example of the structure are described with reference to FIGS. 5A and 5B.

FIGS. 5A and 5B illustrate examples of a structure configured to perform inter-bank reduction operations in parallel based on a plurality of operation groups in a memory device according to one or more embodiments.

While the structure illustrated in FIG. 3 corresponds to an example in which the entire memory bank (e.g., the memory bank 0 to the memory bank 15) is configured as a single tree structure that performs a single reduction operation across the entire bank, FIGS. 5A and 5B illustrate a structure in which the entire memory bank is divided into a plurality of operation groups, reduction operations are performed in parallel for each group, and operation results are selectively integrated.

In the structure illustrated in FIG. 5A, a total of 16 memory banks may be divided into two independent operation groups. For example, a first group 510 may be configured to include the memory bank 0 to the memory bank 7, and a second group 520 may be configured to include the memory bank 8 to the memory bank 15. The PEs included in each group may be connected vertically, similar to FIG. 3, and reduction operations within a group may be performed in stages along the vertical connection. For example, in the first group 510, vector data stored in the memory banks 0 to 7 may be vertically aggregated, and an operation result of the group may be finally generated in a PE corresponding to the memory bank 5. Similarly, in the second group 520, a result may be generated in a PE corresponding to the memory bank 13.

The structure illustrated in FIG. 5B is an example of expanding the two-group configuration of FIG. 5A and dividing the configuration into a total of four operation groups. For example, a first group 530 may include the memory banks 0 to 3, a second group 540 may include the memory banks 4 to 7, a third group 550 may include the memory banks 8 to 11, and a fourth group 560 may include the memory banks 12 to 15. Each group may follow a vertical direction tree structure as described with reference to FIG. 3, and reduction operations within a group may be performed independently and in parallel. Thereafter, an operation result of each group may be transferred to a PE of an upper stage or may be integrated with results of other groups through a horizontal direction connection.

This group-based operation structure may be usefully applied in various actual applications. For example, in a GNN, an operation of collecting and aggregating feature information from neighboring nodes of a specific node may be repeatedly performed, and numerous feature vectors may be distributed and stored in multiple memory banks. By utilizing the structures of one or more embodiments illustrated in FIGS. 5A and 5B, model inference speed may be improved by dividing a set of nodes into a plurality of groups, independently performing feature aggregation within each group, and subsequently integrating operation results at a higher level.

In addition, a similar structure may be utilized in a recommendation model such as a deep learning recommendation model (DLRM). In a recommendation model, a plurality of vectors may be searched for from an embedding table based on a sparse input vector (e.g., a user ID), and a reduction operation that adds or multiplies the plurality of vectors element by element may be performed to generate a dense output vector. In this process, when each row of the embedding table is distributed and stored in a plurality of memory banks, a plurality of reduction operations may be performed in parallel by utilizing a two-group structure as in FIG. 5A or a four-group structure as in FIG. 5B, and a final result may subsequently be integrated through the horizontal direction connection when necessary.

In addition, the structures illustrated in FIG. 5A and FIG. 5B may be expanded into various configurations. The number of groups and the number of banks within a group may not be fixed values but may be flexibly adjusted according to the total number of memory banks, die arrangement conditions, and operation parallelism requirements. For example, a memory device including 32, 64, and/or more memory banks may also be expanded to a structure that allows setting up multiple groups in a similar manner, constructing an independent reduction tree for each group, and then hierarchically integrating operation results between the groups.

In addition, connections between each of the groups may not necessarily be limited to the directions shown in FIG. 3, FIG. 5A, and/or FIG. 5B and may be adaptively changed depending on an operation flow, application algorithm, and/or hardware resource status. Thus, FIG. 5A and 5B are examples for describing examples of various group-based operation structures and may be a basis for expanding applicability of the illustrated memory device structures.

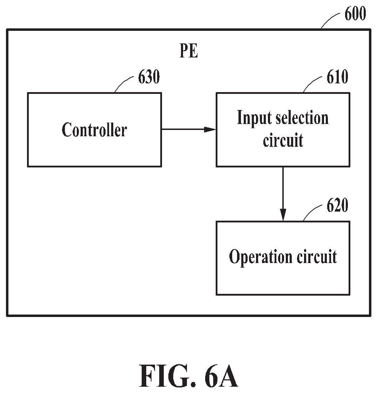

FIG. 6A illustrates a block diagram of an example of a configuration of a PE according to one or more embodiments. The description provided with reference to FIGS. 1 to 5B may substantially equally apply to FIG. 6A.

As described with reference to FIGS. 3 to 5B, PEs are operation blocks that may be arranged to correspond one-to-one to a plurality of memory banks or that may be commonly assigned to the plurality of memory banks. The PEs may have a structure configured to process local data or process external data transmitted from adjacent PEs together with the local data.

Referring to FIG. 6A, a PE 600 may include an input selection circuit 610, an operation circuit 620, and a controller 630. The input selection circuit 610 may be a circuit that selects and provides one of a plurality of input ports to the operation circuit 620 and may be implemented as a MUX structure. A typical MUX usually processes only local data (e.g., an output from a magnetic memory bank) as an input. In an inter-bank reduction operation structure according to the present disclosure, however, external data transmitted from other adjacent PEs may also need to be received as an input, so the input selection circuit 610 may additionally include a plurality of external input ports in addition to local inputs. For example, the input selection circuit 610 may additionally have input ports corresponding to external vectors received from the vertical top, vertical bottom, left, and right, respectively.

An operation of selecting an appropriate input among a plurality of inputs may not be performed by a simple MUX logic alone and may require a separate control circuit configured to perform dynamic control according to an operation situation (e.g., an operation round, operation order, input priority, and group configuration status). To this end, the controller 630 may output a control signal to the input selection circuit 610 to determine an input port to be selected and may also control an operation start time and operation type of the operation circuit 620. The controller 630 may determine an input selection order based on a position or a group configuration of a plurality of PEs. The controller 630 may be configured to control an input port of the input selection circuit 610 according to an order of the reduction operation so that at least one of the local vector or the external vector may be selected.

The controller 630 may also be referred to as an inter-bank operation controller in that the controller 630 controls inter-bank operations and may be internally configured with a state-based logic circuit (or a state machine), a finite-state machine (FSM), and/or a command decoder that interprets commands received from the outside. For example, when "a current operation round is stage 1" and given a condition "Receive a vector from a left adjacent PE," the controller 630 may control the input selection circuit 610 so that the input selection circuit 610 may select a left input port and may instruct the operation circuit 620 to perform an accumulate operation.

The operation circuit 620 may perform element-wise reduction operations such as addition, multiplication, and maximum value operation on a selected input vector and may be configured with various logic elements such as an accumulator, a multiplier, a MAC, and a comparator. A configuration of the operation circuit 620 may be set in various ways depending on a type of operation to be performed. For example, some operation circuits may receive two input vectors as an input and perform a MAC operation, while other circuits may perform an operation for normalization or softmax preprocessing.

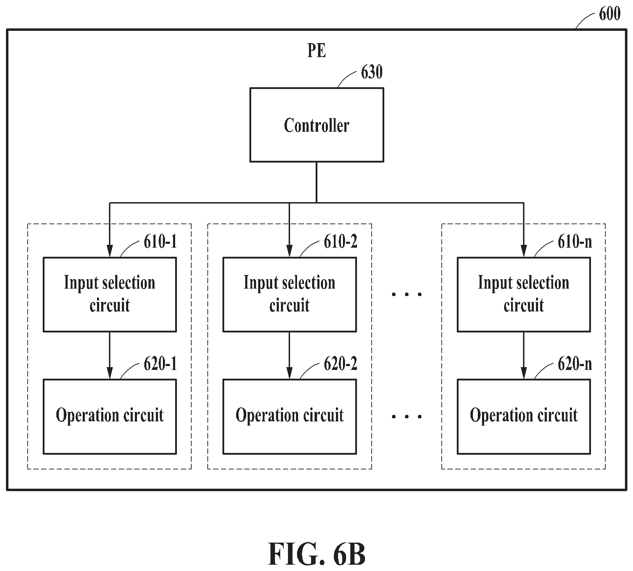

FIG. 6B illustrates an example of a structure in which a plurality of pairs of an input selection circuit and an operation circuit is included in parallel in a single PE according to one or more embodiments. As illustrated in FIG. 6B, the PE 600 may include a plurality of input selection circuits 610-1, 610-2, ..., 610-n and operation circuits 620-1, 620-2, ..., 620-n, and the controller 630 may transmit an individual control signal to each circuit pair. This structure may allow a parallel operation flow within a single PE and may be expanded to a structure that increases the amount of operation processing.

For example, when data is simultaneously transmitted from n banks, the controller 630 may perform n element-wise addition operations simultaneously by setting each of the input selection circuits 610-1 to 610-n to select a different input vector and driving the operation circuits 620-1 to 620-n in parallel.

This structure may also be utilized in a hierarchical tree-based operation or group-based parallel operation scenario and may be particularly advantageous in real-time processing applications in which an operation repetition cycle is short or a response time is important.

In addition, the PEs illustrated in FIGS. 6A and 6B may be implemented as physically separated circuit blocks or may be implemented by being integrated into a single operation core or operation sub-block. This structure may be transformed into various forms depending on the number of operators, the number of input ports, the directionality of a connection circuit, and the like and may affect a die area, power consumption, and operation latency.

As a result, the PE structures of one or more embodiments illustrated in FIGS. 6A and 6B may perform inter-bank reduction operations at high speed, which may provide a hardware structure that secures flexibility in input selection and control while considering parallel operation scalability.

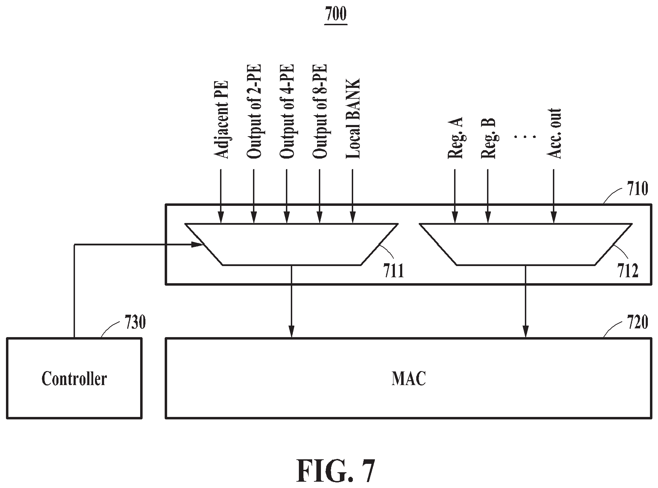

FIG. 7 illustrates a block diagram of an example of a specific configuration of a PE according to one or more embodiments. The description provided with reference to FIGS. 1 to 6B may substantially equally apply to FIG. 7.

A PE 700 illustrated in FIG. 7 may be a PE corresponding to the memory bank 13 of FIG. 3 and may have a structure configured to receive a reduction operation result transmitted from a nearby PE via a plurality of input paths and perform an accumulate operation on the received reduction operation result and local data.

Referring to FIG. 7, the PE 700 may include a multi-input selection circuit 710, a multiply-accumulator (MAC) 720, and a controller 730. The multi-input selection circuit 710 may include a first MUX 711 for selecting one of a plurality of inputs and a second MUX 712 for selecting an operation target register. The first MUX 711 may receive data via a total of five input paths, including adjacent PE, output of 2-PE, output of 4-PE, output of 8-PE, and local BANK, wherein each piece of the data may be an output from an adjacent PE or another PE that generated a reduction result in a specific round.

For example, the adjacent PE may be an output transmitted from a PE corresponding to the memory bank 12, the output of 2-PE may be an output from a PE corresponding to the memory bank 14, the output of 4-PE may be an output from a PE corresponding to the memory bank 11, and the output of 8-PE may be an output from a PE corresponding to the memory bank 5. The local BANK may indicate local data of the memory bank 13 that is directly accessible to the corresponding PE.

The first MUX 711 may select and transmit one of the five inputs to an operation block, and a selected input may be provided to the MAC 720. The MAC 720 may include an accumulator and a multiplier and may perform a multiplication, addition, and/or MAC operation on selected input data with data stored in an accumulation register Reg. A or Reg. B. An output of the MAC 720 may be stored again in an internal register as an accumulation result acc. out or may be transmitted to another PE.

The second MUX 712 may select a second input to be provided to the MAC 720, for example, a comparison target or a reference value to be used in the accumulator. The second MUX 712 may select one of Reg. A, Reg. B, and/or the operation result acc. out of a previous stage, and the selection may be flexibly combined depending on the operation method.

The controller 730 may control a selection operation of the first MUX 711 and the second MUX 712 and an operation timing and operation type of the MAC 720. For example, when a current operation is stage 3, data has been received from an external PE, and a control signal for performing a MAC operation with a value stored in a local bank is received, the controller 730 may control the first MUX 711 and the second MUX 712 so that the first MUX 711 may select an output of the corresponding external PE and the second MUX 712 may select the local register Reg. A.

The PE 700 illustrated in FIG. 7 may realize a structure configured to accumulate reduction results collected from multiple PEs hierarchically based on a multi-input structure described above. In particular, in the vertical and horizontal tree-based interconnect structure described with reference to FIG. 3, the PE located at the top (e.g., the PE corresponding to the bank 13) may function as an end point of an operation flow that comprehensively processes intermediate operation results arrived from various directions.

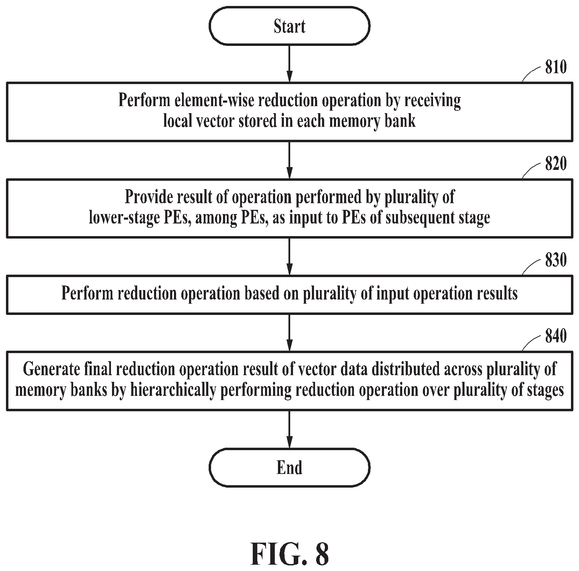

FIG. 8 illustrates an example of a method of performing a reduction operation according to one or more embodiments.

For ease of description, operations 810 to 840 are described as being performed by the memory device 100 illustrated in FIG. 1. However, operations 810 to 840 may also be performed by another suitable electronic device in a suitable system.

Furthermore, although operations of FIG. 8 may be performed in the illustrated order and manner therein, the order of one of more of the operations may be changed, one or more of the operations may be omitted, two or more of the operations may be performed in parallel or simultaneously, and/or other operations may be additionally performed without departing from the scope of the described embodiments.

In operation 810, a plurality of PEs respectively corresponding to a plurality of memory banks may perform an element-wise reduction operation by receiving a local vector stored in each memory bank. The element-wise reduction operation may be implemented as, for example, an element-wise addition or multiplication operation of vectors, and each PE may independently process an operation on local bank data.

In operation 820, a result of an operation performed by a plurality of lower-stage PEs among the PEs may be provided as an input to PEs of a subsequent stage. A transfer of operation results between the plurality of PEs may be performed in stages according to an operation order or data flow. The expressions 'lower' and 'upper' PEs are not limit to a structurally hierarchical hardware structure but may refer to a sequential operation flow based on an operation sequence or data dependency relationship.

For example, a lower PE may refer to a PE that performs an operation first in the operation order, and an upper PE may refer to a PE that receives a result of the operation as an input and performs an operation later.

In addition, depending on an operation stage or situation, a PE that performed an operation at a lower layer may operate as part of a higher layer in a subsequent operation stage, and in contrary, a PE defined as a higher layer may be included in a lower layer in a different context.

In operation 830, a PE of each stage may perform a reduction operation based on a plurality of input operation results. The reduction operation may be expanded to an accumulate operation combining multiple inputs or a local operation, and an operation method may be configured according to various operation circuit structures such as a MAC structure, an addition-only accumulator, and/or a maximum value selector.

In operation 840, the memory device 100 may generate a final reduction operation result of vector data distributed across the plurality of memory banks by hierarchically performing the reduction operation over a plurality of stages. The memory device 100 of one or more embodiments may generate the final reduction operation result through the reduction operation performed across the plurality of PEs over a plurality of stages without a dedicated operation device for centrally aggregating common operation results.

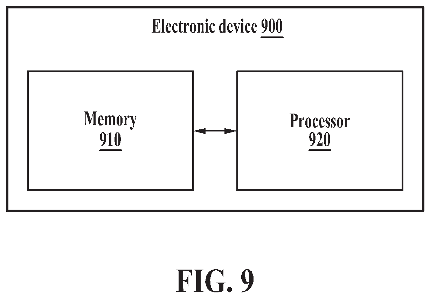

FIG. 9 illustrates an example of an electronic device according to one or more embodiments. The description provided with reference to FIGS. 1 to 8 may substantially equally apply to FIG. 9.

Referring to FIG. 9, an electronic device 900 may include a memory 910 (e.g., one or more memories) and a processor 920 (e.g., one or more processors). The memory 910 may include the memory device 100 illustrated in FIG. 1 and may include a plurality of memory banks, one or more PEs corresponding one-to-one or one-to-many to each memory bank, and connection circuits between the PEs. The memory 910 may be implemented based on various high-speed memory devices, such as DRAM, magnetoresistive random-access memory (MRAM), parameter random-access memory (PRAM), and/or RRAM, and may be configured to perform in-memory computation in addition to a simple storage function.

The processor 920 may be implemented in various forms, such as a CPU, a GPU, an NPU, a digital signal processor (DSP), and/or a general-purpose microcontroller, and may transmit an operation command or data request through an interface with the memory 910. In particular, the processor 920 may transmit not only simple load/store commands but also various control commands including an operation command (e.g., a PIM operation command) for performing an in-memory reduction operation.

For example, the processor 920 may control the memory 910 so that the memory 910 may perform a reduction operation including operation methods such as sum, product, max, min, and/or mean on operand vectors stored in the plurality of memory banks. An operation target may be, for example, a neighboring node feature (or a neighbor feature) of a GNN-based model, an embedding table vector of a DLRM, and/or stream data collected in a high-speed statistical processing system.

The memory 910 may locally process the reduction operation by utilizing a plurality of PEs included therein and may perform an inter-bank operation in stages or in parallel through a direct interconnect structure between each of the PEs, without a central aggregator or external interconnect. An operation structure may be implemented in various expanded structures, including tree-based hierarchical interconnect, parallel operation group configuration, dynamic input selection, and operation path configuration.

For example, when the electronic device 900 is implemented as a smartphone, tablet, and/or mobile device with a built-in AI acceleration function, the memory 910 may perform inference processing for real-time speech recognition, image processing, and/or user-customized recommendation result generation in memory, thereby alleviating a bandwidth bottleneck between the memory 910 and the processor 920 and saving computational energy.

In addition, when the electronic device 900 is a server, a data center node, and/or an edge device for high-performance computation, the structure of the memory 910 may be configured as a processing node for enhancing inference performance of a large-scale AI model and may be utilized for, for example, attention weight summation of a transformer-based model, vector accumulation for generating a softmax input, and/or a partial aggregation stage in a distributed graph operation.

As described above, the memory 910 may be utilized not only as a simple data storage device but as intelligent memory or computational memory, which is configured to perform a complex operation directly within the memory 910 in cooperation with the processor920. Through this configuration, the electronic device 900 may respond to various application fields such as high-speed data analysis, energy-efficient machine learning operations, and real-time sensor information aggregation and may be particularly useful in, for example, an on-device AI and an edge computing environment.

The memory devices, memory banks, PEs, connection circuits, host processors, host memory controllers, input selection circuits, operation circuits, controllers, multi-input selection circuits, MAC 720, controller, first MUXs, second MUXs, electronic devices, memories, processors, memory device 100, memory banks 110, PEs 120, connection circuit 130, host processor 150, host memory controller 160, PE 600, input selection circuit 610, operation circuit 620, controller 630, input selection circuits 610-1, 610-2, ..., 610-n, operation circuits 620-1, 620-2, ..., 620-n, PE 700, multi-input selection circuit 710, MAC 720, controller 730, first MUX 711, second MUX 712, electronic device 900, memory 910, and processor 920 described herein, including descriptions with respect to respect to FIGS. 1-9, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-9 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the invention is specified by the enclosed claims.

## Claims

1. A memory device comprising:
a plurality of memory banks; and
a plurality of processing elements, PEs,
wherein each of the plurality of PEs comprises:
an input selection circuit configured to:
select and provide one of a plurality of input vectors to an operation;
receive, via one input port, a local vector stored in a memory bank corresponding to the PE among the plurality of memory banks; and
receive, via one or more other input ports, an external vector transmitted from one or more other memory banks among the plurality of memory banks;
a controller configured to control an input selection of the input selection circuit; and
an operation circuit configured to receive selected input vectors and perform an element-wise reduction operation.

2. The memory device of claim 1,
further comprising a connection circuit configured to transmit vector data between the plurality of PEs,
wherein the connection circuit is configured such that the plurality of PEs is configured to transmit an operation result according to a plurality of operation stages, such that an operation result generated by a PE of a preceding stage is provided to a PE of a subsequent stage according to an order of the plurality of operation stages to perform the element-wise reduction operation.

3. The memory device of claim 2, wherein the connection circuit is configured to connect a plurality of PE groups in parallel such that the reduction operation is performed independently within each PE group.

4. The memory device of claim 3, wherein the controller is configured to determine an order of the input selection based on either one or both of a position and a group configuration of the plurality of PEs.

5. The memory device of one of claims 1 to 4, wherein the controller is configured to control an input port of the input selection circuit according to an order of the reduction operation such that either one or both of the local vector and the external vector is selected, or
wherein the input selection circuit comprises a multiplexer circuit configured to select and output one of the plurality of input vectors, or
wherein each of the plurality of PEs is arranged to correspond one-to-one to each of the plurality of memory banks.

6. The memory device of one of claims 1 to 5, wherein one or more PEs of the plurality of PEs is arranged to correspond in common to two or more memory banks among the plurality of memory banks.

7. The memory device of one of claims 1 to 6, wherein a correspondence relationship between the plurality of PEs and the plurality of memory banks is configurable according to either one or both of a system configuration and an operation mode.

8. The memory device of one of claims 1 to 7, wherein the memory bank is formed based on dynamic random-access memory, DRAM.

9. The memory device of one of claims 1 to 8,
wherein the input vector is provided in a form of a matrix comprising a plurality of vectors, and
wherein the operation circuit is configured to perform the element-wise reduction operation in either one or both of a row direction and column direction of the matrix.

10. The memory device of one of claims 1 to 9, wherein the element-wise reduction operation is configured to be performed through a control method and an interconnect structure between the plurality of PEs without a dedicated operation device for separately aggregating or centrally processing common operation results other than the plurality of PEs.

11. A memory device comprising:
a plurality of memory banks;
a plurality of processing elements, PEs; and
an inter-PE connection circuit configured to transmit vector data between the plurality of PEs,
wherein each of the plurality of PEs is configured to perform a reduction operation on one or more input vectors, and
wherein the connection circuit is configured to provide a plurality of data transmission path between the plurality of PEs, and the reduction operation is performed in stages or in parallel across the plurality of PEs based on vector data transmitted between the plurality of PEs.

12. The memory device of claim 11, wherein the connection circuit is configured to hierarchically connect the plurality of PEs over a plurality of stages, such that a PE performing an operation earlier transmits a reduction operation result to a PE performing an operation later, according to an order of the reduction operation,
wherein the connection circuit is preferably configured to connect a plurality of PE groups in parallel such that the reduction operation is performed independently within each PE group and an operation result of each PE group is aggregated into a selected PE.

13. The memory device of claim 11 or 12, wherein each of the plurality of PEs is configured to perform the reduction operation based on either one or both of an external vector transmitted via the connection circuit and a local vector stored in a memory bank corresponding to a determined PE, or
wherein the connection circuit is configured to dynamically select a connection path between the plurality of PEs such that a path of the reduction operation is adjustable according to an order of the reduction operation, or
wherein the reduction operation is configured to be performed based on the connection circuit and the plurality of PEs without a dedicated operation device for centrally aggregating common operation results other than the plurality of PEs.

14. A method comprising:
performing, by a plurality of processing elements, PEs, corresponding to each of a plurality of memory banks, an element-wise reduction operation by receiving a local vector stored in each memory bank;
providing a result of an operation performed by a plurality of lower-stage PEs among the plurality of PEs as an input to PEs of a subsequent stage;
performing, by a PE of each stage, a reduction operation based on a plurality of input operation results; and
generating a final reduction operation result of vector data distributed across the plurality of memory banks by hierarchically performing the element-wise reduction operation over a plurality of stages.

15. The method of claim 14, wherein the generating of the final reduction operation result comprises generating the final reduction operation result through the element-wise reduction operation performed across the plurality of PEs over a plurality of stages without a dedicated operation device for centrally aggregating common operation results.
